# EUROPEAN PATENT APPLICATION

(11) **EP 4 723 472 A1**
(43) Date of publication of application: **08.04.2026**
(21) Application number: 23942161.3
(22) Date of filing: 28.11.2023
(51) Int. Cl.: H02P 27/08, H02M 1/088, H02M 7/5387

(54) **MOTOR CONTROLLER, VEHICLE BRAKING SYSTEM AND ELECTRIC VEHICLE**

(30) Priority: 21.06.2023 CN 202321609894 U
(71) Applicant: Huawei Digital Power Technologies Co., Ltd., Shenzhen, Guangdong 518043 (CN)
(72) Inventor: KONG, Xuejuan, Shenzhen, Guangdong 518043 (CN); FENG, Ningbo, Shenzhen, Guangdong 518043 (CN); CUI, Zhaoxue, Shenzhen, Guangdong 518043 (CN)
(74) Representative: Gill Jennings & Every LLP
(86) International application number: PCT/CN2023/134761
(87) International publication number: WO 2024/259895

(57) **Abstract**

This application provides a motor control unit, including an inverter circuit, a switching control circuit, a power supply selection circuit, and an input control circuit. An input of the power supply selection circuit is connected to at least two power sources, the power supply selection circuit includes at least two selection units, an output of each selection unit is connected to an input of the input control circuit, and an output of the input control circuit is connected to an input of the inverter circuit. The power supply selection circuit selects to connect an electrical connection between one of the power sources and the input control circuit, or disconnect electrical connections between all the power sources and the input control circuit. In response to receiving a control signal, the switching control circuit controls the input control circuit to connect or disconnect an electrical connection between the power supply selection circuit and the inverter circuit. This application further provides a vehicle braking system and an electric vehicle. Therefore, according to the motor control unit, the vehicle braking system, and the electronic vehicle provided in this application, safe power supply to the motor control unit can be implemented when the motor runs abnormally.

## Description

### CROSS-REFERENCE TO RELATED APPLICATIONS

This application claims priority to Chinese Patent Application No. 202321609894.5, filed with the China National Intellectual Property Administration on June 21, 2023 and entitled "MOTOR CONTROL UNIT, VEHICLE BRAKING SYSTEM, AND ELECTRIC VEHICLE", which is incorporated herein by reference in its entirety.

### TECHNICAL FIELD

This application relates to the field of motor control technologies, and in particular, to a motor control unit, a vehicle braking system, and an electric vehicle.

### BACKGROUND

With development of new energy technologies, electric vehicles are more widely used. The electric vehicle usually controls torque of a motor through a motor control unit. To ensure functional safety of the electric vehicle, the motor control unit needs to cut off a torque output to the motor in response to abnormal running of the motor. When the motor control unit is powered by a dual redundant power supply architecture, how to implement safe power supply to the motor control unit when the motor runs abnormally becomes an important topic.

### SUMMARY

In view of the foregoing problem, this application provides a motor control unit, a vehicle braking system, and an electric vehicle, to implement safe power supply to a motor control unit when a motor runs abnormally.

According to a first aspect, this application provides a motor control unit. The motor control unit includes an inverter circuit, a switching control circuit, a power supply selection circuit, and an input control circuit. An input of the power supply selection circuit is connected to at least two power sources, the power supply selection circuit includes at least two selection units, an output of each selection unit is connected to an input of the input control circuit, an output of the input control circuit is connected to an input of the inverter circuit, and an output of the inverter circuit is connected to a motor. The power supply selection circuit is configured to select to connect an electrical connection between one of the power sources and the input control circuit, or disconnect electrical connections between all the power sources and the input control circuit. An output of the switching control circuit is connected to the input control circuit, and the switching control circuit is configured to: in response to receiving a control signal, control the input control circuit to connect or disconnect an electrical connection between the power supply selection circuit and the inverter circuit. The motor control unit provided in this application can implement a dual-redundancy architecture for circuit power supply. In addition, when the motor runs abnormally, safe power supply to the motor control unit can be implemented by controlling connection and disconnection of the input control circuit through the switching control circuit.

With reference to the first aspect, in a possible implementation, the at least two power sources include a first power source and a second power source, the at least two selection units include a first selection unit and a second selection unit, the first selection unit includes a first selection switching transistor, the second selection unit includes a second selection switching transistor, an input of the first selection switching transistor is connected to the first power source, an output of the first selection switching transistor is connected to the input control circuit, an input of the second selection switching transistor is connected to the second power source, and an output of the second selection switching transistor is connected to the input control circuit. In a scenario with a dual-power supply architecture, the motor control unit provided in this application selects a power source through the power supply selection circuit, and controls, based on the input control circuit, whether to turn on the power source to supply power to the inverter circuit.

With reference to the first aspect, in a possible implementation, in response to voltages of the first power source and the second power source falling within a preset range, and in response to the voltage of the first power source being greater than the voltage of the second power source, the first selection switching transistor is turned on, or in response to the voltage of the second power source being greater than the voltage of the first power source, the second selection switching transistor is turned on. According to the motor control unit provided in this application, the first selection switching transistor and the second selection switching transistor may work in an oring mode, that is, have a unidirectional turn-on feature. Therefore, when the output voltages of the first power source and the second power source are both normal, a power source with a higher voltage is selected to supply power, to save electric energy.

With reference to the first aspect, in a possible implementation, in response to voltages of the first power source and the second power source falling within a preset range, in response to receiving a selection signal, the first selection switching transistor is turned on, and in response to receiving the selection signal, the second selection switching transistor is turned on. According to the motor control unit provided in this application, the first selection switching transistor and the second selection switching transistor may be controlled by a control signal output by the switching control unit, so that one of the power sources is selected to supply power, to save electric energy.

With reference to the first aspect, in a possible implementation, the output of the switching control circuit is connected to the first selection switching transistor and the second selection switching transistor, and the switching control circuit is configured to: in response to receiving a turn-on signal, output the selection signal to the first selection switching transistor or the second selection switching transistor. The turn-on signal indicates that the voltages of the first power source and the second power source fall within the preset range. According to the motor control unit provided in this application, when the output voltages of the first power source and the second power source are both normal, one of the power sources may be selected to supply power, to save electric energy.

With reference to the first aspect, in a possible implementation, the input control circuit includes a first control switching transistor, an input of the first control switching transistor is connected to the outputs of the first selection switching transistor and the second selection switching transistor, and an output of the first control switching transistor is connected to the input of the inverter circuit. The switching control circuit is connected to the first control switching transistor, and is configured to: in response to receiving a turn-off signal, control the first control switching transistor to be turned off. According to the motor control unit provided in this application, the input control circuit may include the first control switching transistor, and the first control switching transistor may be controlled by the switching control circuit, to be turned off when the turn-off signal is received, to cut off power supply of the two power sources to the inverter circuit. This implements safe power supply to the motor control unit.

With reference to the first aspect, in a possible implementation, the input control circuit includes a first control switching transistor and a second control switching transistor. An input of the first control switching transistor is connected to the outputs of the first selection switching transistor and the second selection switching transistor, and an output of the first control switching transistor is connected to the input of the inverter circuit. The switching control circuit is connected to the first control switching transistor and the second control switching transistor, and is configured to: in response to receiving a turn-off signal, control the first control switching transistor and the second control switching transistor to be turned off. According to the motor control unit provided in this application, the input control circuit may include the first control switching transistor and the second control switching transistor. The two control switching transistors are respectively connected to the selection switching transistors in the two switching units. The first control switching transistor and the second control switching transistor may be controlled by the switching control circuit to be turned off when the turn-off signal is received, to cut off power supply of the two power sources to the inverter circuit. This implements safe power supply to the motor control unit.

With reference to the first aspect, in a possible implementation, the switching control circuit is further configured to: in response to receiving a first short-circuit signal, control the second control switching transistor to be turned off; and in response to receiving a second short-circuit signal, control the first control switching transistor to be turned off. The first short-circuit signal indicates that the first selection switching transistor is short-circuited, and the second short-circuit signal indicates that the second selection switching transistor is short-circuited. According to the motor control unit provided in this application, when the first selection switching transistor or the second selection switching transistor is short-circuited, the other selection switching transistor can be controlled to be turned off, to prevent the other power source from being burnt due to overcurrent caused by short-circuit, and protect safety of the power supply circuit and safety of the motor control unit.

With reference to the first aspect, in a possible implementation, the motor control unit further includes a microcontroller. An input of the microcontroller is configured to receive an input signal, an output of the microcontroller is connected to the switching control circuit, and the input signal indicates target torque of the motor. The microcontroller is configured to: in response to the target torque exceeding a preset torque range, output the turn-off signal. According to the motor control unit provided in this application, when the target torque of the motor is abnormal, power supply of the two power sources to the inverter circuit can be cut off, to implement safe power supply to the motor control unit.

With reference to the first aspect, in a possible implementation, the motor control unit further includes a watchdog circuit. An input of the watchdog circuit is connected to the microcontroller, and an output of the watchdog circuit is connected to the switching control circuit. The watchdog circuit is configured to: in response to receiving no watchdog feeding signal from the microcontroller within preset time, output the turn-off signal. The watchdog feeding signal indicates whether the microcontroller is faulty. According to the motor control unit provided in this application, whether the microcontroller is faulty can be determined based on whether the watchdog circuit periodically receives the watchdog feeding signal from the microcontroller, to determine that the microcontroller is faulty when no watchdog feeding signal is received within the preset time, so as to cut off power supply of the two power sources to the inverter circuit. This implements safe power supply to the motor control unit.

According to a second aspect, this application provides a vehicle braking system, including a central controller and wheel-side actuators. The central controller is connected to the wheel-side actuators and is configured to control the wheel-side actuators, and the wheel-side actuators include the motor control unit provided in any possible implementation of the first aspect.

According to a third aspect, this application provides an electric vehicle, including the motor control unit provided in any possible implementation of the first aspect or the vehicle braking system provided in any possible implementation of the second aspect.

With reference to the third aspect, in a possible implementation, the electric vehicle further includes a plurality of wheels, each of the plurality of wheels is connected to the motor control unit or the vehicle braking system, and the motor control unit or the vehicle braking system is configured to control running of each wheel.

In addition, for technical effects corresponding to the second aspect and the third aspect, refer to corresponding descriptions in the first aspect. Details are not described herein again.

### BRIEF DESCRIPTION OF DRAWINGS

FIG. 1 is a diagram of a structure of a motor control system according to this application;
FIG. 2 is a diagram of a structure of a motor control unit according to this application;
FIG. 3 is a diagram of a structure of a safety monitoring circuit according to this application;
FIG. 4 is a circuit schematic of an inverter circuit according to this application;
FIG. 5 is a circuit schematic of a switching module according to Embodiment 1 of this application;
FIG. 6 is a circuit schematic of a turn-off control circuit according to this application;
FIG. 7 is a circuit schematic of a switching module according to Embodiment 2 of this application;
FIG. 8 is a circuit schematic of a switching module according to Embodiment 3 of this application; and
FIG. 9 is a circuit schematic of a switching module according to Embodiment 4 of this application.

### DESCRIPTION OF EMBODIMENTS

The following clearly describes the technical solutions in embodiments of this application with reference to the accompanying drawings in embodiments of this application.

It may be understood that a connection relationship described in this application is a direct or indirect connection. For example, that A is connected to B may be that A is directly connected to B, or may be that A is indirectly connected to B through one or more other electrical components. For example, A may be directly connected to C, and C may be directly connected to B, so that A and B are connected through C. It may be further understood that "A is connected to B" described in this application may be that A is directly connected to B, or may be that A is indirectly connected to B through one or more other electrical components.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists.

In the descriptions of this application, words such as "first" and "second" are merely used to distinguish between different objects, and do not limit quantities and execution sequences. In addition, the words such as "first" and "second" do not indicate a definite difference. In addition, the terms "include" and "have" and any variations thereof are intended to cover non-exclusive inclusion.

The technical solutions of this application are further described below in detail with reference to accompanying drawings.

With development of new energy technologies, electric vehicles are more widely used. The electric vehicle usually controls torque of a motor through a motor control unit. To ensure functional safety of the electric vehicle, the motor control unit needs to cut off a torque output to the motor in response to abnormal running of the motor. When the motor control unit is powered by a dual redundant power supply architecture, how to implement safe power supply to the motor control unit when the motor runs abnormally becomes an important topic.

Therefore, this application provides a motor control unit, a system, and an electric vehicle, to implement a dual-redundancy architecture to supply power to an inverter circuit, and also ensure that when undervoltage occurs in one power source, the other power source normally supplies power to the inverter circuit, to reduce a risk of power supply interruption of the inverter circuit caused by a fault. In addition, when a switching transistor in one switching branch is short-circuited, the other switching branch is turned off, to avoid damage caused by overcurrent of the power source due to a loop formed between the two power sources. In addition, the motor control unit provided in this application may further control two switching branches to be turned off when functional safety is abnormal and an internal circuit is short-circuited in the motor control unit, thereby enhancing safety of the motor control unit.

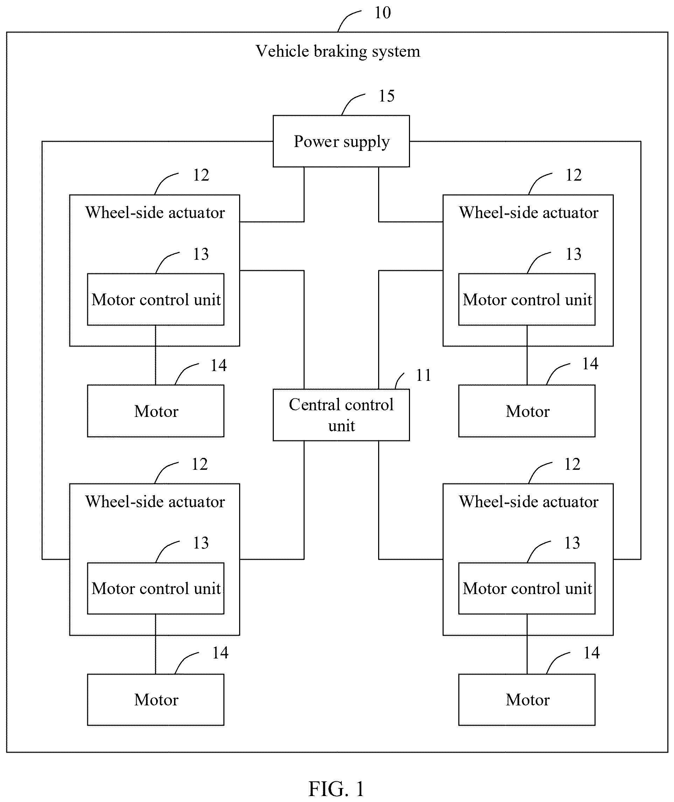

FIG. 1 is a diagram of a structure of a vehicle braking system 10 according to this application. The vehicle braking system 10 includes a central controller 11, wheel-side actuators 12, motors 14, and a power supply 15. The wheel-side actuator 12 includes a motor control unit 13.

The power supply 15 is electrically connected to the four wheel-side actuators 12. The power supply 15 is configured to supply power to the four wheel-side actuators 12.

The central controller 11 is electrically connected to the four wheel-side actuators 12. The central controller 11 is configured to output an adjustment signal to the four wheel-side actuators 12, to adjust alternating current parameters provided by the four wheel-side actuators 12 for the corresponding motors 14, so that the motors 14 output corresponding torque. Specifically, the four wheel-side actuators 12 are disposed respectively corresponding to four wheels of an electric vehicle, and the motor control units 13 in the four wheel-side actuators 12 are respectively connected to the motors 14 of the four wheels, to control running of the motors 14, so as to drive the four wheels or perform braking.

The central controller 11 may obtain a running state of the motor 14 and/or an external control signal, and output the adjustment signal based on the obtained running state of the motor and/or the external control signal. For example, the central controller 11 may be connected to an external controller such as a central control panel, a self-driving controller, a power steering controller, or a power domain controller, to obtain a corresponding control signal. The central controller 11 may be further connected to an external sensor such as an inertia sensor, a wheel speed sensor, or a braking pedal sensor, to obtain the running state of the motor.

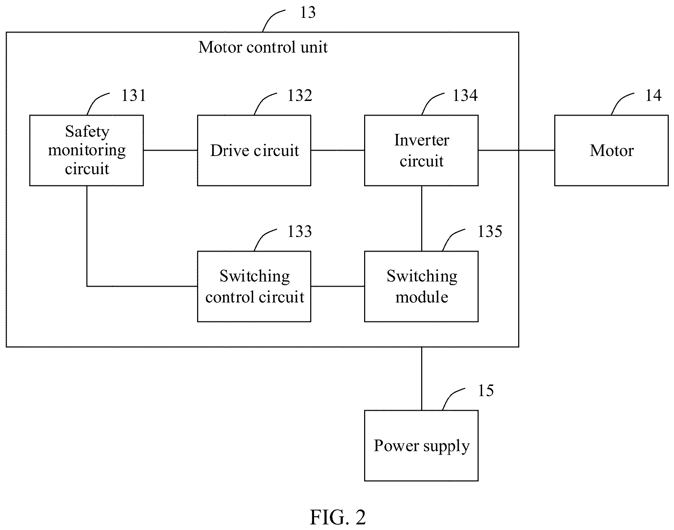

FIG. 2 is a diagram of a structure of the motor control unit 13 according to this application. The motor control unit 13 includes a safety monitoring circuit 131, a drive circuit 132, a switching control circuit 133, an inverter circuit 134, and a switching module 135.

The inverter circuit 134 is electrically connected to the motor 14. The inverter circuit 134 includes a plurality of switching bridge arms, each switching bridge arm includes an upper bridge arm switching transistor and a lower bridge arm switching transistor, and a midpoint of each switching bridge arm outputs a single-phase alternating current to the motor 14, to control the motor 14 to output torque. For example, the inverter circuit 134 may include an inverter circuit such as a two-phase inverter circuit or a three-phase inverter circuit, to convert a received bus voltage into an alternating current voltage, and supply power to the motor 14. The motor 14 may convert alternating current electrical energy output by the inverter circuit 134 into mechanical energy, to drive a corresponding wheel to rotate or brake.

The switching module 135 is electrically connected between the inverter circuit 134 and the power supply 15. The switching module 135 is configured to turn on or turn off power supplied by the power supply 15 to the inverter circuit 134. The power supply 15 includes at least two power sources 151, and two power sources 151 separately supply power to the inverter circuit 134 through the switching module 135. In this way, the two power sources 151 and the switching module 135 form a dual redundant power supply architecture.

The drive circuit 132 is electrically connected to the inverter circuit 134. The drive circuit 132 is configured to output a drive signal to a bridge arm switching transistor in the inverter circuit 134, to control turn-on or turn-off of the bridge arm switching transistor in the inverter circuit 134, so as to supply alternating current power to the motor 14, so that the motor 14 outputs corresponding torque.

The safety monitoring circuit 131 is electrically connected to the drive circuit 132 and the switching control circuit 133. The safety monitoring circuit 131 is configured to: output a control signal to the drive circuit 132 and the switching control circuit 133, and output a drive control signal to the drive circuit 132. In response to receiving the control signal, the drive circuit 132 can output a drive signal, to control turn-on or turn-off of the bridge arm switching transistor in the inverter circuit 134.

The switching control circuit 133 is electrically connected to the switching module 135. The switching control circuit 133 is configured to: in response to receiving the control signal, control turn-on or turn-off of the switching module 135. Specifically, the switching module 135 includes a power supply selection circuit and an input control circuit. An input of the power supply selection circuit is connected to the at least two power sources 151, the power supply selection circuit includes at least two selection units, an output of each selection unit is connected to an input of the input control circuit, and an output of the input control circuit is connected to an input of the inverter circuit 134. The power supply selection circuit is configured to select to connect an electrical connection between one of the power sources 151 and the input control circuit, or disconnect electrical connections between all the power sources 151 and the input control circuit. An output of the switching control circuit is connected to the input control circuit, and the switching control circuit is configured to: in response to receiving a control signal, control the input control circuit to connect or disconnect an electrical connection between the power supply selection circuit and the inverter circuit.

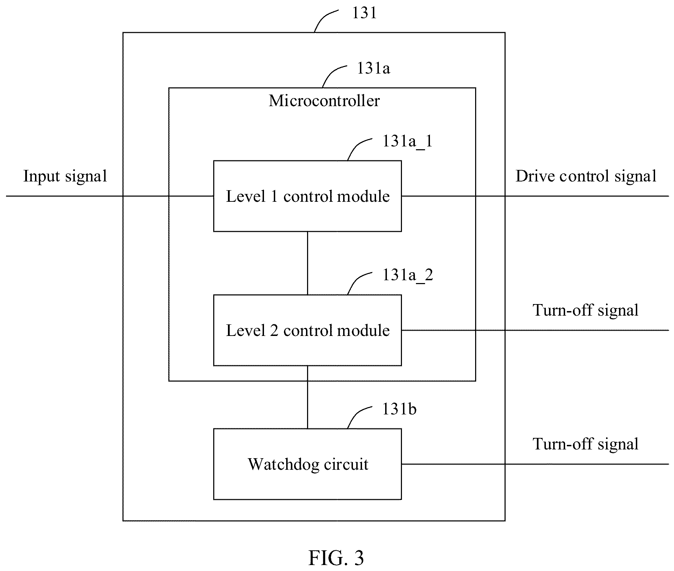

FIG. 3 is a diagram of a structure of the safety monitoring circuit 131 according to this application. The safety monitoring circuit 131 includes a microcontroller 131a and a watchdog circuit 131b. The microcontroller 131a includes a level 1 control module 131a_1 and a level 2 control module 131a_2. The microcontroller 131a and the watchdog circuit 131b form an EGAS architecture.

The level 1 control module 131a_1 forms a level 1 (Level 1) of the EGAS architecture. The level 1 control module 131a_1 is configured to receive an input signal, and calculate target torque based on the input signal, to obtain a drive control signal. Specifically, the level 1 control module 131a_1 may sample the input signal, to obtain a running parameter of the motor 14 included in the input signal, and calculate the target torque based on the running parameter of the motor 14, to obtain the drive control signal. For example, the input signal may include a detection signal output by a sensor, and the detection signal may be a signal indicating an output voltage of the motor control unit 13, a signal indicating an output current of the motor control unit 13, a signal indicating a temperature of the motor control unit 13, a signal indicating a rotational speed of the motor 14, or the like.

The level 2 control module 131a_2 forms a level 2 (Level 2) of the EGAS architecture. The level 2 control module 131a_2 is electrically connected to the level 1 control module 131a_1. The level 2 control module 131a_2 is configured to: receive the input signal sampled by the level 1 control module 131a_1, and in response to the sampled input signal being abnormal, output a first turn-off signal. Specifically, that the input signal is abnormal may include: Current torque of the motor 14 indicated by the input signal is abnormal, target torque of the motor 14 indicated by the input signal is abnormal, a sensor signal is abnormal, or the like. For example, the level 2 control module 131a_2 may detect, by using the sampled input signal, that the target torque of the motor 14 is abnormal, to output the first turn-off signal. That the torque is abnormal may include: The current torque of the motor 14 does not match output torque of the motor control unit 13, the current torque of the motor 14 does not match the target torque indicated by the drive control signal, the target torque exceeds a preset torque range, or the like.

For another example, the level 2 control module 131a_2 may determine, by using the sampled input signal, that the detection signal is abnormal, to determine that a sensor is faulty, and therefore output the turn-off signal. That the detection signal is abnormal may include: A current detection signal output by the sensor exceeds a preset threshold, a voltage detection signal exceeds a preset threshold, or the like.

For another example, the level 2 control module 131a_2 may determine, by using the sampled input signal, that a functional safety (functional safety) fault occurs in another component, and therefore output the turn-off signal.

The watchdog circuit 131b forms a level 3 (Level 3) of the EGAS architecture. The watchdog circuit 131b is electrically connected to the level 2 control module 131a_2. The watchdog circuit 131b is configured to: in response to abnormal working of the level 2 control module 131a_2, output a second turn-off signal. For example, the watchdog circuit 131b may detect whether an abnormality determining rule of the level 2 control module 131a_2 for the input signal is correct, and output the turn-off signal if the abnormality determining rule is incorrect.

In some embodiments, that the watchdog circuit 131b responds to the abnormal working of the level 2 control module 131a_2 may include: The level 2 control module 131a_2 periodically outputs a watchdog feeding signal to the watchdog circuit 131b, so that a timer in the watchdog circuit 131b is reset periodically. If the watchdog circuit 131b receives no watchdog feeding signal within preset time, it outputs a turn-off signal after the timer in the watchdog circuit 131b expires within the preset time.

In some embodiments, the level 1 control module 131a_1 may also receive the adjustment signal output by the central controller 11, and generate a drive control signal based on an indication of the adjustment signal, to control the inverter circuit 134 to output specific torque to the motor 14.

In some embodiments, the level 2 control module 131a_2 may also receive a fault signal output by the drive circuit 132, and output the first turn-off signal based on the fault signal.

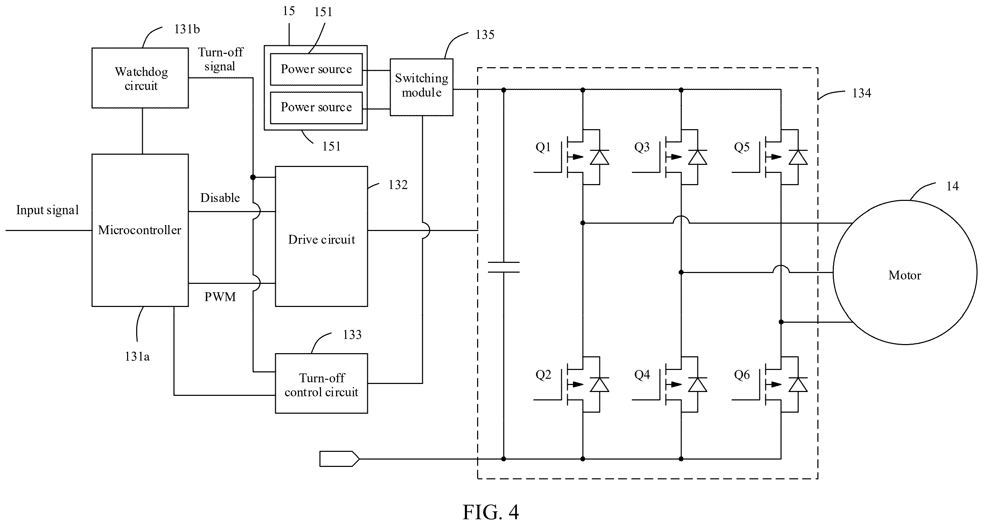

In some embodiments, the level 1 control module 131a_1 is connected to the drive circuit 132 through a PWM pin, to output a drive control signal to the drive circuit 132 through the PWM pin. The level 2 control module 131a_2 is connected to the drive circuit 132 and the turn-off control circuit 133 through a disable pin, to output the first turn-off signal to the drive circuit 132 and the turn-off control circuit 133 through the disable pin. The level 2 control module 131a_2 is connected to the drive circuit 132 through a fault pin, to receive, through the fault pin, the fault signal output by the drive circuit 132. FIG. 4 is a circuit schematic of the inverter circuit 134 according to this application. The inverter circuit 134 includes three switching bridge arms and an input capacitor C. Each switching bridge arm includes an upper bridge arm switching transistor and a lower bridge arm switching transistor. A first switching bridge arm includes a switching transistor Q1 and a switching transistor Q2. A second switching bridge arm includes a switching transistor Q3 and a switching transistor Q4. A third switching bridge arm includes a switching transistor Q5 and a switching transistor Q6. One end of an upper bridge arm switching transistor (the switching transistor Q1, the switching transistor Q3, or the switching transistor Q5) of each bridge arm is electrically connected to two outputs of the switching module 135, and two inputs of the switching module 135 are respectively connected to the two power sources 151. Output voltages of the two power sources 151 may be the same or may be different.

A gate of each switching transistor in the inverter circuit 134 is electrically connected to the drive circuit 132, to receive the drive signal output by the drive circuit 132. Each switching transistor in the inverter circuit 134 is turned on or off based on the drive signal, to control parameters such as a frequency, a phase, and an amplitude of an output current of the inverter circuit 134, so as to adjust torque output by the inverter circuit 134 to the motor 14.

The switching module 135 is electrically connected to the switching control circuit 133. The switching module 135 may be controlled by the switching control circuit 133, and is turned on or off based on the control signal, to control power supply of the power supply 15 to the inverter circuit 134. The switching module 135 may be controlled by the switching control circuit 133 to turn on or turn off a first branch 135a and/or a second branch 135b, to control power supply of the power supply 15 to the inverter circuit 134.

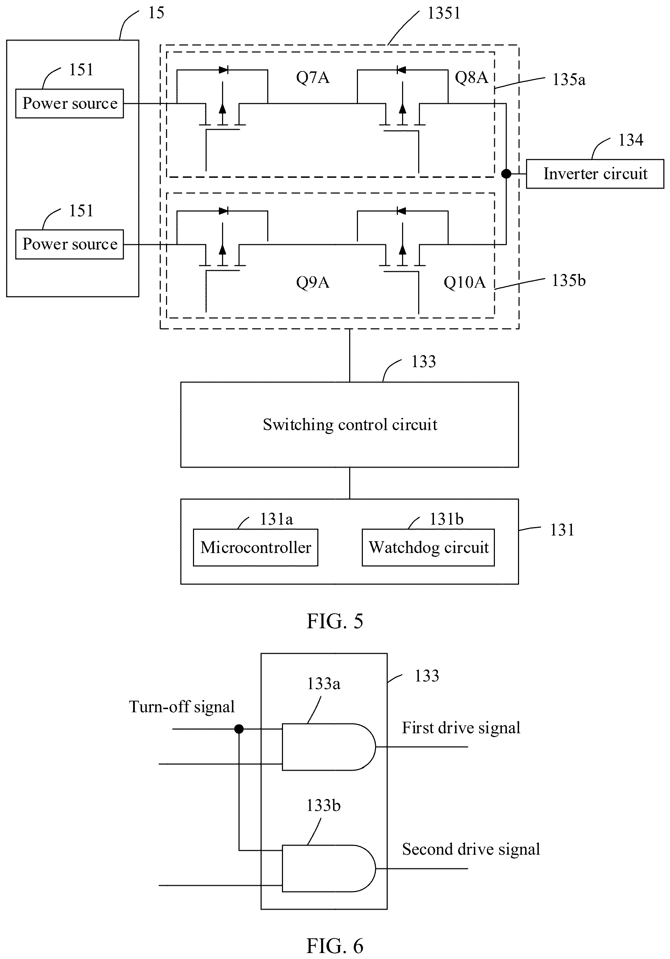

Specifically, FIG. 5 is a circuit schematic of a switching module 1351 according to Embodiment 1 of this application. In this embodiment, a power supply selection circuit in the switching module 1351 includes a first switching transistor Q7A and a first switching transistor Q9A. The first switching transistor Q7A and the first switching transistor Q9A respectively form a first selection switching transistor and a second selection switching transistor. The input control circuit includes a second switching transistor Q8A and a second switching transistor Q10A. The second switching transistor Q8A and the second switching transistor Q10A respectively form a first control switching transistor and a second control switching transistor. In addition, the first switching transistor Q7A and the second switching transistor Q8A form the first branch 135a, and the first switching transistor Q9A and the second switching transistor Q10A form the second branch 135b.

The first switching transistor Q7A and the second switching transistor Q8A are connected in series back to back. That is, a source of the first switching transistor Q7A is connected to a drain of the second switching transistor Q8A. Similarly, the first switching transistor Q9A and the second switching transistor Q10A are also connected in series back to back.

The first switching transistor Q7A and the first switching transistor Q9A both work in a unidirectional conduction (oring) state. That is, the first switching transistor Q7A and the first switching transistor Q9A have a same unidirectional conduction characteristic as that of a diode. The first switching transistor Q7A is used as an example. When the first switching transistor Q7A is in the oring working state, and a drain voltage of the first switching transistor Q7A is greater than a source voltage, the first switching transistor Q7A is turned on, and when the drain voltage of the first switching transistor Q7A is less than the source voltage, the first switching transistor Q7A is turned off. The first switching transistor Q7A and the first switching transistor Q9A may be controlled by an external control circuit, to be in the oring working state. For example, the external control circuit may be electrically connected to gates of the first switching transistor Q7A and the first switching transistor Q9A, and control the first switching transistor Q7A and the first switching transistor Q9A to be in the oring state by controlling gate voltages of the first switching transistor Q7A and the first switching transistor Q9A. It may be understood that, when the first switching transistor Q7A and the first switching transistor Q9A work in the oring state, and an output voltage of the power source 151 connected to the first switching transistor Q7A is greater than an output voltage of the power source 151 connected to the first switching transistor Q9A, the first switching transistor Q7A is turned on. When the output voltage of the power source 151 connected to the first switching transistor Q9A is greater than the output voltage of the power source 151 connected to the first switching transistor Q7A, the first switching transistor Q9A is turned on. In this way, in the first branch 135a and the second branch 135b, one switching branch with a higher output voltage of the power source 151 is turned on, and the other switching branch is turned off, to implement a dual-redundancy architecture for power supply. In addition, when an output voltage of the power source 151 connected to any switching branch is undervoltage, the other switching branch may continue to supply power, to ensure continuous power supply to the inverter circuit 134.

Gates of the second switching transistor Q8A and the second switching transistor Q10A are electrically connected to the switching control circuit 133. The switching control circuit 133 may control turn-on or turn-off of the second switching transistor Q8A and the second switching transistor Q10A, to control turn-on or turn-off of the switching module 135. For example, in response to the output voltages of the two power sources 151 connected to the first branch 135a and the second branch 135b being both greater than a preset threshold, the microcontroller 131a outputs a turn-on signal to the switching control circuit 133. The switching control circuit 133 controls, based on the turn-on signal, the second switching transistor Q8A and the second switching transistor Q10A to be turned on, and the switching module 135 is turned on to work normally. For another example, in response to an abnormal input signal, the microcontroller 131a outputs a turn-off signal to the switching control circuit 133. The switching control circuit 133 controls, based on the turn-off signal, the second switching transistor Q8A and the second switching transistor Q10A to be turned off, and the switching module 135 is turned off. For another example, in response to abnormal working of the level 2 control module 131a_2, the watchdog circuit 131b may output a turn-off signal to the switching control circuit 133. The switching control circuit 133 controls, based on the turn-off signal, the second switching transistor Q8A and the second switching transistor Q10A to be turned off, and the switching module 135 is turned off.

In this embodiment, in response to a short circuit in a switching transistor in the two switching branches, the microcontroller 131a may further output a corresponding control signal to the switching control circuit 133. For example, in response to a short circuit in the first switching transistor Q7A, the microcontroller 131a may output a first short-circuit signal to the switching control circuit 133. The switching control circuit 133 controls, based on the first short-circuit signal, the second switching transistor Q10A to be turned off. For another example, in response to a short circuit in the first switching transistor Q9A, the microcontroller 131a may output a second short-circuit signal to the switching control circuit 133. The switching control circuit 133 controls, based on the second short-circuit signal, the first switching transistor Q8A to be turned off. In this way, when one switching branch is short-circuited, the microcontroller 131a may control the other switching branch to be turned off, to protect the power source 151 from being damaged due to overcurrent. The microcontroller 131a may detect a short circuit in the switching transistors in the two switching branches through sensors such as a current sensor and a voltage sensor.

Therefore, the motor control unit 13 provided in this application can implement the dual-redundancy architecture to supply power to the inverter circuit 134, and also ensure that one switching branch normally supplies power to the inverter circuit 134 when undervoltage occurs in a power source 151 of the other switching branch, to reduce a risk of power supply interruption of the inverter circuit 134 caused by a fault. In addition, when a switching transistor in one switching branch is short-circuited, the other switching branch is turned off, to avoid damage caused by overcurrent to the power source 151 due to a loop formed between the two power sources 151. In addition, the motor control unit 13 provided in this application may further control two switching branches to be turned off when functional safety is abnormal and an internal circuit is short-circuited in the motor control unit 13, thereby enhancing safety of the motor control unit 13.

FIG. 6 is a circuit schematic of the switching control circuit 133 according to this application. The switching control circuit 133 includes an AND gate 133a and an AND gate 133b. A first pin of the AND gate 133a is connected to the watchdog circuit 131b to receive a turn-off signal, a second pin of the AND gate 133a is connected to the microcontroller 131a to receive a selection signal, and an output pin of the AND gate 133a is electrically connected to the gate of the second switching transistor Q8A. A first pin of the AND gate 133b is connected to the watchdog circuit 131b to receive a turn-off signal, a second pin of the AND gate 133b is connected to the microcontroller 131a to receive a selection signal, and an output pin of the AND gate 133b is electrically connected to the gate of the second switching transistor Q10A.

A logical truth table of the switching control circuit 133 provided in this application is shown in Table 1.

**Table 1 Logic truth table of the switching control circuit 133**

| Control state | Input signal | | | Output signal | |
|---|---|---|---|---|---|
| | Turn-off signal | First control signal | Second control signal | First drive signal | Second drive signal |
| Normal status | 1 | 1 | 1 | 1 | 1 |
| The microcontroller 131a is abnormal | 0 | 1 | 1 | 0 | 0 |
| Turn on Q8A and turn off Q10A | 1 | 1 | 0 | 1 | 0 |
| Turn off Q8A and turn on Q10A | 1 | 0 | 1 | 0 | 1 |

"1" indicates that a pin receiving the signal is in a high-level state, and "0" indicates that a pin receiving the signal is in a low-level state. In a normal case, the output voltages of the two power sources 151 are both normal. That is, the output voltages of the two power sources 151 are both greater than the preset threshold. In this case, the microcontroller 131a sets all inputs of the AND gate 133a and the AND gate 133b to a high level, and this is equivalent to outputting a conduction signal to the switching control circuit 133. In this case, two outputs of the switching control circuit 133 are both at a high level, and the second switching transistor Q8A and the second switching transistor Q10A are both turned on. When the microcontroller 131a is abnormal, the watchdog circuit 131b outputs turn-off signals to the AND gate 133a and the AND gate 133b, so that all the inputs of the AND gate 133a and the AND gate 133b are set to a low level. In this case, the two outputs of the switching control circuit 133 are both at a low level, and the second switching transistor Q8A and the second switching transistor Q10A are both turned off. When the second switching transistor Q8A needs to be turned on and the second switching transistor Q10A needs to be turned off, the microcontroller 131a controls the second pin of the AND gate 133b to be at a low level, and the other pins to be at a high level. In this case, an output of the AND gate 133a is at a high level, and an output of the AND gate 133b is at a low level, so that the second switching transistor Q8A is turned on and the second switching transistor Q10A is turned off. When the second switching transistor Q10A needs to be turned on and the second switching transistor Q8A needs to be turned off, the microcontroller 131a controls the second pin of the AND gate 133a to be at a low level, and the other pins to be at a high level. In this case, an output of the AND gate 133b is at a high level, and an output of the AND gate 133a is at a low level, so that the second switching transistor Q8A is turned off and the second switching transistor Q10A is turned on.

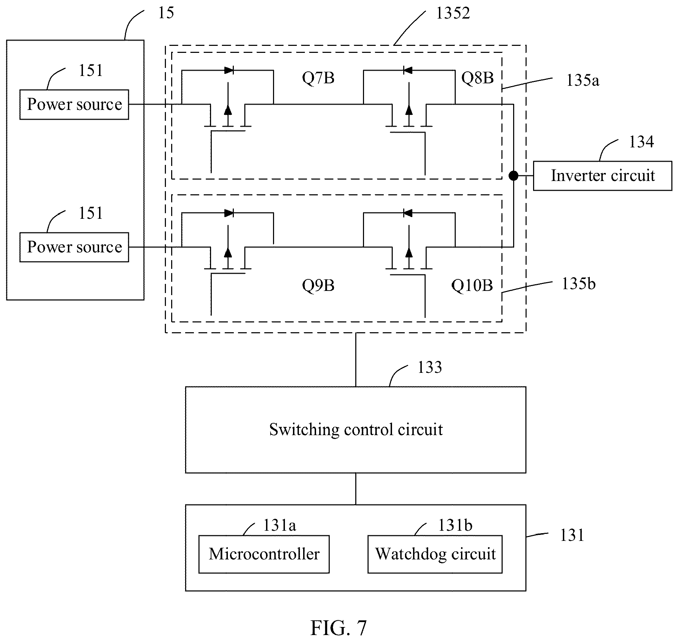

FIG. 7 is a circuit schematic of a switching module 1352 according to Embodiment 2 of this application. A difference between the switching module 1352 provided in this embodiment and the switching module 1351 in FIG. 5 lies in: The switching control circuit 133 controls turn-on or turn-off of a first switching transistor Q7B and a first switching transistor Q9B in the switching module 1352.

Specifically, gates of the first switching transistor Q7B and the first switching transistor Q9B are also electrically connected to the switching control circuit 133, and the switching control circuit 133 may control turn-on or turn-off of the first switching transistor Q7B, a second switching transistor Q8B, the first switching transistor Q9B, and a second switching transistor Q10B, to control turn-on or turn-off of the switching module 135. For example, in response to the output voltages of the two power sources 151 connected to the first branch 135a and the second branch 135b being both greater than the preset threshold, the microcontroller 131a outputs the selection signal to the switching control circuit 133. The switching control circuit 133 controls, based on the selection signal, the first branch 135a to be turned off and the second branch 135b to be turned on, or controls the second branch 135b to be turned off and the first branch 135a to be turned on. That the first branch 135a is turned on means that all switching transistors in the first branch 135a are turned on, and that the first branch 135a is turned off means that all switching transistors in the first branch 135a are turned off. This is the same for the second branch 135b, and details are not described herein again.

In this way, when the power sources 151 of the two branches can both provide normal power supply voltages, the microcontroller 131a can control one of the switching branches to be turned on and the other switching branch to be turned off, to save power. For another example, in response to an abnormal input signal, the microcontroller 131a outputs a turn-off signal to the switching control circuit 133. The switching control circuit 133 controls, based on the turn-off signal, the first switching transistor Q7B, the second switching transistor Q8B, the first switching transistor Q9B, and the second switching transistor Q10B to be turned off, so that the switching module 135 is turned off. For another example, in response to abnormal working of the level 2 control module 131a_2, the watchdog circuit 131b may output a turn-off signal to the switching control circuit 133. The switching control circuit 133 controls, based on the turn-off signal, the first switching transistor Q7B, the second switching transistor Q8B, the first switching transistor Q9B, and the second switching transistor Q10B to be turned off, so that the switching module 135 is turned off.

In this embodiment, in response to an output voltage of one of the two power sources 151 connected to the first branch 135a and the second branch 135b being less than or equal to the preset threshold, the microcontroller 131a may further output a corresponding control signal to the switching control circuit 133, to control the corresponding switching branch to be turned off. For example, in response to the output voltage of the power source 151 connected to the first branch 135a being less than or equal to the preset threshold, the microcontroller 131a may output the first control signal to the switching control circuit 133, so that the first branch 135a is turned off and the second branch 135b is turned on. In this way, the microcontroller 131a can select, based on the output voltages of the two power sources 151, a proper switching branch to be turned on, to reduce a functional safety fault caused by an excessively low power supply voltage.

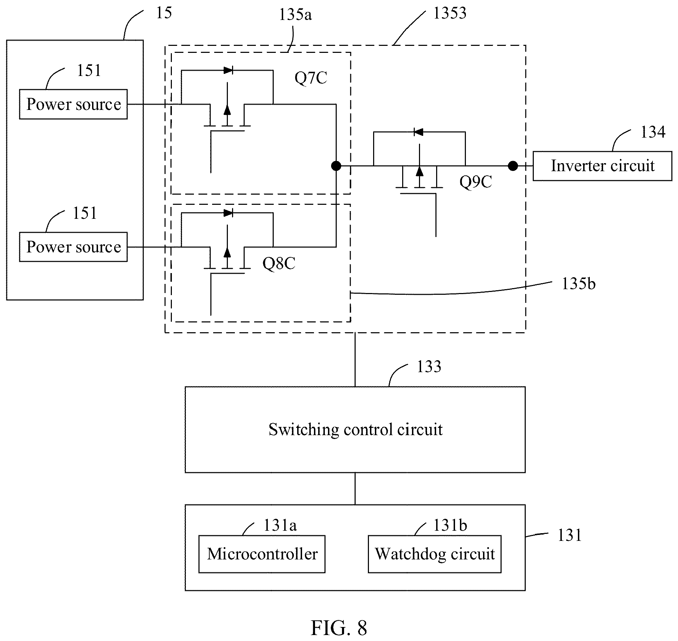

FIG. 8 is a circuit schematic of a switching module 1353 according to Embodiment 3 of this application. A difference between the switching module 1353 provided in this embodiment and the switching module 1351 in FIG. 5 lies in: A power supply selection circuit in the switching module 1353 includes a first switching transistor Q7C disposed on the first branch 135a, and a first switching transistor Q8C disposed on the second branch 135b. The first switching transistor Q7C and the first switching transistor Q8C form a first selection switching transistor and a second selection switching transistor respectively. The input control circuit includes a main switching transistor Q9C. The main switching transistor Q9C forms a first control switching transistor.

The first switching transistor Q7C and the first switching transistor Q8C both work in an oring state, and the main switching transistor Q9C is controlled by the switching control circuit 133 to be turned on or turned off, to implement turn-on or turn-off of the switching module 135. For example, in response to the output voltages of the two power sources 151 connected to the first branch 135a and the second branch 135b being both greater than the preset threshold, the microcontroller 131a outputs a turn-on signal to the switching control circuit 133. The switching control circuit 133 controls, based on the turn-on signal, the main switching transistor Q9C to be turned on, and the switching module 135 is turned on to work normally. For another example, in response to an abnormal input signal, the microcontroller 131a outputs a turn-off signal to the switching control circuit 133. The switching control circuit 133 controls, based on the turn-off signal, the main switching transistor Q9C to be turned off, and the switching module 135 is turned off. For another example, in response to abnormal working of the level 2 control module 131a_2, the watchdog circuit 131b may output a turn-off signal to the switching control circuit 133. The switching control circuit 133 controls, based on the turn-off signal, the main switching transistor Q9C to be turned off, and the switching module 135 is turned off.

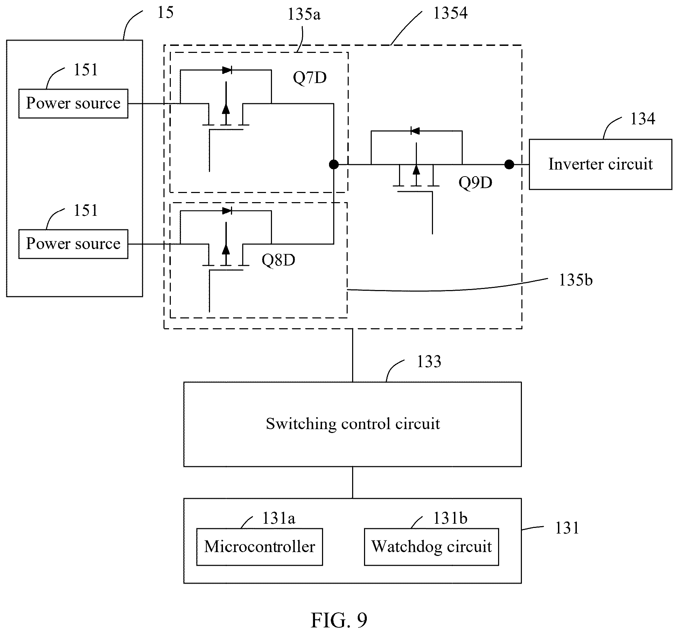

FIG. 9 is a circuit schematic of a switching module 1354 according to Embodiment 4 of this application. A difference between the switching module 1354 provided in this embodiment and the switching module 1352 in FIG. 7 lies in: The power supply selection circuit in the switching module 1353 includes a first switching transistor Q7D disposed on the first branch 135a and a first switching transistor Q8D disposed on the second branch 135b. The first switching transistor Q7D and the first switching transistor Q8D respectively form a first selection switching transistor and a second selection switching transistor. The input control circuit includes a main switching transistor Q9D. The main switching transistor Q9D forms a first control switching transistor.

Specifically, gates of the first switching transistor Q7D and the first switching transistor Q8D are also electrically connected to the switching control circuit 133, and the switching control circuit 133 may control turn-on or turn-off of the first switching transistor Q7D, the first switching transistor Q8D, and the main switching transistor Q9D, to control turn-on or turn-off of the switching module 135. For example, in response to the output voltages of the two power sources 151 connected to the first branch 135a and the second branch 135b being both greater than a preset threshold, the microcontroller 131a outputs a first control signal or a second control signal to the switching control circuit 133. The switching control circuit 133 controls, based on the first control signal, the first branch 135a to be turned off and the second branch 135b to be turned on, or controls, based on the second control signal, the second branch 135b to be turned off and the first branch 135a to be turned on. In this way, when the power sources 151 of the two branches can both provide normal power supply voltages, the microcontroller 131a can control one of the switching branches to be turned on and the other switching branch to be turned off, to save power. For another example, in response to an abnormal input signal, the microcontroller 131a outputs a turn-off signal to the switching control circuit 133. The switching control circuit 133 controls, based on the turn-off signal, the main switching transistor Q9D to be turned off, so that the switching module 135 is turned off. For another example, in response to abnormal working of the level 2 control module 131a_2, the watchdog circuit 131b may output a turn-off signal to the switching control circuit 133. The switching control circuit 133 controls, based on the turn-off signal, the main switching transistor Q9D to be turned off, so that the switching module 135 is turned off.

In this embodiment, in response to an output voltage of one of the two power sources 151 connected to the first branch 135a and the second branch 135b being less than or equal to the preset threshold, the microcontroller 131a may further output a corresponding control signal to the switching control circuit 133, to control the corresponding switching branch to be turned off. For example, in response to the output voltage of the power source 151 connected to the first branch 135a being less than or equal to the preset threshold, the microcontroller 131a may output the first control signal to the switching control circuit 133, so that the first branch 135a is turned off and the second branch 135b is turned on. In this way, the microcontroller 131a can select, based on the output voltages of the two power sources 151, a proper switching branch to be turned on, to reduce a functional safety fault caused by an excessively low power supply voltage.

This application further provides an electric vehicle, including the motor control unit 13 or the motor control system 10 provided in this application.

A person of ordinary skill in the art should understand that the foregoing implementations are merely intended to describe this application but are not intended to limit this application, and all appropriate modifications and changes made to the foregoing embodiments fall within the protection scope of this application provided that the modifications and changes are within the spirit and scope of the essence of this application.

## Claims

1. A motor control unit, wherein the motor control unit comprises an inverter circuit, a switching control circuit, a power supply selection circuit, and an input control circuit, an input of the power supply selection circuit is connected to at least two power sources, the power supply selection circuit comprises at least two selection units, an output of each selection unit is connected to an input of the input control circuit, an output of the input control circuit is connected to an input of the inverter circuit, and an output of the inverter circuit is connected to a motor;
the power supply selection circuit is configured to select to connect an electrical connection between one of the power sources and the input control circuit, or disconnect electrical connections between all the power sources and the input control circuit; and
an output of the switching control circuit is connected to the input control circuit, and the switching control circuit is configured to:
in response to receiving a control signal, control the input control circuit to connect or disconnect an electrical connection between the power supply selection circuit and the inverter circuit.

2. The motor control unit according to claim 1, wherein the at least two power sources comprise a first power source and a second power source, the at least two selection units comprise a first selection unit and a second selection unit, the first selection unit comprises a first selection switching transistor, the second selection unit comprises a second selection switching transistor, an input of the first selection switching transistor is connected to the first power source, an output of the first selection switching transistor is connected to the input control circuit, an input of the second selection switching transistor is connected to the second power source, and an output of the second selection switching transistor is connected to the input control circuit.

3. The motor control unit according to claim 2, wherein in response to voltages of the first power source and the second power source falling within a preset range, and
in response to the voltage of the first power source being greater than the voltage of the second power source, the first selection switching transistor is turned on; or
in response to the voltage of the second power source being greater than the voltage of the first power source, the second selection switching transistor is turned on.

4. The motor control unit according to claim 2, wherein in response to voltages of the first power source and the second power source falling within a preset range,
in response to receiving a selection signal, the first selection switching transistor is turned on; and
in response to receiving the selection signal, the second selection switching transistor is turned on.

5. The motor control unit according to claim 4, wherein the output of the switching control circuit is connected to the first selection switching transistor and the second selection switching transistor, and the switching control circuit is configured to:
in response to receiving a turn-on signal, output the selection signal to the first selection switching transistor or the second selection switching transistor, wherein
the turn-on signal indicates that the voltages of the first power source and the second power source fall within the preset range.

6. The motor control unit according to claim 2, wherein the input control circuit comprises a first control switching transistor, an input of the first control switching transistor is connected to the outputs of the first selection switching transistor and the second selection switching transistor, and an output of the first control switching transistor is connected to the input of the inverter circuit; and
the switching control circuit is connected to the first control switching transistor, and is configured to:
in response to receiving a turn-off signal, control the first control switching transistor to be turned off.

7. The motor control unit according to claim 2, wherein the input control circuit comprises a first control switching transistor and a second control switching transistor, an input of the first control switching transistor is connected to the outputs of the first selection switching transistor and the second selection switching transistor, and an output of the first control switching transistor is connected to the input of the inverter circuit; and
the switching control circuit is connected to the first control switching transistor and the second control switching transistor, and is configured to:
in response to receiving a turn-off signal, control the first control switching transistor and the second control switching transistor to be turned off.

8. The motor control unit according to claim 7, wherein the switching control circuit is further configured to:
in response to receiving a first short-circuit signal, control the second control switching transistor to be turned off; and
in response to receiving a second short-circuit signal, control the first control switching transistor to be turned off, wherein
the first short-circuit signal indicates that the first selection switching transistor is short-circuited, and the second short-circuit signal indicates that the second selection switching transistor is short-circuited.

9. The motor control unit according to claim 6, wherein the motor control unit further comprises a microcontroller, an input of the microcontroller is configured to receive an input signal, an output of the microcontroller is connected to the switching control circuit, the input signal indicates target torque of the motor, and the microcontroller is configured to:
in response to the target torque exceeding a preset torque range, output the turn-off signal.

10. The motor control unit according to claim 9, wherein the motor control unit further comprises a watchdog circuit, an input of the watchdog circuit is connected to the microcontroller, an output of the watchdog circuit is connected to the switching control circuit, and the watchdog circuit is configured to:
in response to receiving no watchdog feeding signal from the microcontroller within preset time, output the turn-off signal, wherein
the watchdog feeding signal indicates whether the microcontroller is faulty.

11. A vehicle braking system, comprising a central controller, wheel-side actuators, and motors, wherein the central controller is connected to the wheel-side actuators and is configured to control the wheel-side actuators, the wheel-side actuators are connected to the motors and are configured to control running of the motors, and the wheel-side actuators comprise the motor control unit according to any one of claims 1 to 10.

12. An electric vehicle, comprising the motor control unit according to any one of claims 1 to 10 or the vehicle braking system according to claim 11 and a plurality of wheels, wherein
each of the plurality of wheels is connected to the motor control unit or the vehicle braking system, and the motor control unit or the vehicle braking system is configured to control running of each wheel.
